# EUROPÄISCHE PATENTSCHRIFT

(11) **EP 2 902 560 B1**
(45) Veröffentlichungstag und Bekanntmachung des Hinweises auf die Patenterteilung: **19.07.2017**
(21) Anmeldenummer: 15153588.7
(22) Anmeldetag: 03.02.2015
(51) Int. Cl.: E04C 2/32, E04B 1/80, F16L 59/06, E04B 1/74, E04B 1/61, E04C 2/38

(54) **Paneel zum Isolieren eines Bauwerks und Dämmsystem**
Panel for isolating a structure and insulation system
Panneau destiné à isoler une construction et système d'isolation

(30) Priorität: 04.02.2014 DE 102014001697
(43) Veröffentlichungstag der Anmeldung: 05.08.2015
(73) Patentinhaber: Andrews, Nawar, 10627 Berlin (DE)
(72) Erfinder: Andrews, Nawar, 10627 Berlin (DE)
(74) Vertreter: Pfenning, Meinig & Partner mbB

(56) Entgegenhaltungen:
- WO-A1-01/39570
- BE-A- 556 392
- CH-A5- 647 290
- DE-A1- 1 559 575
- DE-A1- 2 349 401
- JP-A- 2012 225 428
- US-A- 3 968 831
- US-A1- 2007 223 993

## Beschreibung

Die Erfindung betrifft ein Paneel zum Isolieren eines Bauwerks nach dem Oberbegriff des Hauptanspruchs, das insbesondere zur Wärme-, Schall- und Feuchteisolation verwendet werden kann, sowie ein mehrere solcher Paneele umfassendes Dämmsystem und ein entsprechend gedämmtes Bauwerk.

Ein aus dem Stand der Technik bekanntes gattungsgemäßes Paneel ist in der Druckschrift BE 556392 A beschrieben.

Aktuelle Forschungsarbeiten über Dämmstoffe und energieeffiziente Materialien haben versucht, bei kleinstmöglicher Wanddicke, die geforderten U-Werte von derzeitigen Energieeinsparstandards zu erreichen. Bisher waren dazu Dämmstoffdicken von 30 cm bis 40 cm und damit Wanddicken von bis zu 60 cm erforderlich.

Derzeit entwickelt sich die Verwendung von Vakuumtechnologie im Bereich der Wärmedämmung, und es wird daher versucht, ihre Umsetzung und die Herstellung entsprechender Dämmsysteme zu optimieren. Vor allem im Baubereichwurden verschiedene Ideen entwickelt, um den Wärmeverlust mit Hilfe von Vakuumtechnologien zu reduzieren. Dafür bietet die Verwendung von sogenannten VIP (Vakuumlsolations-Paneele) eine sehr gute Technik mit niedrigem U-Wert. Mit Hilfe dieser Technik lässtsich die Dämmstoffdicke auf weniger als 10% der üblichen Dämmstoffdicken reduzieren. Zudem bewirkt der Einsatz von VIP einefünf- biszehnfach geringere Wärmeleitfähigkeit im Vergleich zu "konventionellen" Dämmstoffen, wie Schäumen oder Fasermaterialien. Entsprechende evakuierbare Isolierpaneele sind z.B. in den Druckschriften DE 23 49 401 A1 und US 2011/0183119 A1 beschrieben.

Die aus dem Stand der Technik bekannten Systeme dieser Art zeigen viele Nachteile. Zum einen müssen sie oft speziell an die Geometrie der jeweiligen Anwendung angepasst und/oder in speziellen Formaten neu hergestellt werden, und zum anderen Überschreiten ihre Kosten die vertretbaren Grenzen. Auch erweist sich die Installation und nötigenfalls eine Reparatur vor Ort bei den bekannten Systemen als schwierig und aufwendig. Die bis jetzt entwickelte VIP-Technik konnte hinsichtlich der Bauform bisher nicht zur Herstellung von maßgerechten und flexibleren Plattenformaten dienen. Ebenso konnten sie nicht die geforderte Leistung gegen den Wärmeverlust insbesondere durch die linien- und punktbezogenen Wärmebrücken bringen. Schließlich ist es bei herkömmlichen VIP bisher nicht gelungen, das Vakuum langfristig zu halten, weshalb sie ihren Isolierwert mit der Zeit einbüßen.

Der Erfindung liegt die Aufgabe zugrunde, ein Paneel zum Isolieren eines Bauwerks vorzuschlagen, mit dem sich die geschilderten Nachteile vermeiden lassen. Dieses Paneel soll also insbesondere eine möglichst gute Isolierung bei vergleichsweise geringer Dicke bewirken können und dabei flexibel einsetzbar, also mit möglichst geringem Aufwand an unterschiedliche Maße und geometrische Eigenschaften des zu isolierenden Bauwerks anpassbar, sein. Dabei soll es sich möglichst kostengünstig herstellen lassen. Der Erfindung liegt ferner die Aufgabe zugrunde, ein entsprechend vorteilhaftes und flexibel einsetzbares Dämmsystem für Bauwerke vorzuschlagen sowie ein Bauwerk mit einer dementsprechend effektiven und kostengünstigen Dämmung.

Diese Aufgabe wird erfindungsgemäß gelöst durch ein evakuierbares Paneel mit den Merkmalen des Hauptanspruchs sowie durch ein Dämmsystem gemäß Anspruch 8 und ein Bauwerk gemäß Anspruch 14. Vorteilhafte Ausgestaltungen und Weiterentwicklungen der Erfindung ergeben sich mit den weitgehend beliebig kombinierbaren Merkmalen der Unteransprüche.

Das vorgeschlagene evakuierbare Paneel zum Isolieren eines Bauwerks umfasset zwei geformte Platten, die einen Hohlraum einschließen, wobei die Platten zumindest innerhalb eines durch einen Rand des Paneels begrenzten Bereichs jeweils eine Form haben, die sich aus aneinander angrenzenden, zu einem fortgesetzten Muster zusammengesetzten gleichartigen Strukturelementen von jeweils rechteckigem Grundriss zusammensetzt, wobei jedes dieser Strukturelemente durch eine Erhebung in einer von der jeweils anderen Platte weg weisenden Richtung gegeben ist und wobei die Strukturelemente der beiden Platten einander so gegenüber liegen, dass der Hohlraum eine Vielzahl von einzelnen Zellen umfasst, die jeweils durch jeweils eines der Strukturelemente jeder der beiden Platten begrenzt sind, wobei aneinander angrenzende Zellen jeweils durch eine frei bleibende Öffnung miteinander verbunden sind. Dabei sind die Strukturelemente so orientiert, dass Randlinien der rechteckigen Grundrisse der Strukturelemente parallel zu Abschnitten des Randes des Paneels verlaufen, wobei die Platten erfindungsgemäß innerhalb der einzelnen Strukturelemente gleichmäßig konvex gewölbt sind, also ohne Knicke innerhalb der einzelnen Strukturelemente, so dass die Platten dort-anders als entlang der Linien, an denen die einzelnen Strukturelemente aneinanderstoßen - einer regulären Fläche entsprechend geformt sind, wobei die Platten innerhalb der einzelnen Strukturelemente typischerweise mit konstanter oder im wesentlichen konstanter Krümmung gestaltet sein werden. Dadurch haben die Zellen eine blasenförmige Gestalt.

Durch die beschriebene Form der Platten, die zwei gegenüberliegende Außenflächen des Paneels bilden, werden verschiedene Vorteile erreicht. Zunächst lässt sich damit bei gegebener Dicke des Paneels ein vergleichsweise großer durchschnittlicher Abstand zwischen den Außenflächen einhalten, was - insbesondere bei einer Evakuierung des Paneels - eine vergleichsweise gute Isolierung mit sich bringt. Wärmebrücken zwischen den Platten können dabei auf ein Minimum reduziert werden. Außerdem lässt sich durch die vorgeschlagene Form eine besonders gute Formstabilität auch bei großen Druckunterschieden zwischen dem Hohlraum und einer Umgebung realisieren, wobei sich eine Herstellung des Paneels als ausgesprochen einfach erweist und mithin kostengünstig geschehen kann. Wegen der Form der ein gleichmäßiges Muster bildenden Außenflächen des Paneels erweist es sich schließlich als einfach, das Paneel der Geometrie der jeweiligen Anwendung anzupassen, so dass es sich erübrigt, verschiedenste Ausführungen des Paneels in speziellen Formaten für verschiedene Anwendungssituationen herzustellen. So ist es problemlos möglich, das Paneel, das in einer einheitlichen Größe hergestellt werden kann, durch Schneiden auf ein gewünschtes Format zu bringen und mehrere Paneele dieser Art miteinander so zu verbinden, dass die Paneele nach wie vor weitgehend der Umgebung gegenüber Luftdicht bleiben, auch wenn die Hohlräume der Paneele miteinander verbunden werden können. Auch dadurch lassen sich unnötige Kosten vermeiden. So erweist sich die Installation und nötigenfalls auch eine Reparatur vor Ort als ungleich einfacher als bei vergleichbaren Systemen aus dem Stand der Technik.

Die genannten Strukturelemente können z.B. sphärisch oder einem Ausschnitt einer Ellipsoidoberfläche entsprechend geformt sein. Sie können dabei so dimensioniert sein, dass die Zellen jeweils die Form einer an vier Seiten abgeschnittenen Kugel oder eines an vier Seiten abgeschnittenen Ellipsoids haben. Bei typischen Ausführungen wird der Grundriss der einzelnen Strukturelemente jeweils quadratisch sein, auch wenn andere Rechteckformen möglich sind. In einer speziellen Ausführung ergibt sich dabei eine Gestalt des Paneels, die einem gleichmäßigen Muster sich überschneidender bzw. in Randbereichen überlappender Kugeln entspricht. Es wäre aber auch möglich, einen größeren Abstand zwischen den Platten vorzusehen.

Um eine Verformung des Paneels bei Druckunterschieden zwischen dem Hohlraum und der Umgebung, insbesondere bei einem starken Unterdruck in dem Hohlraum nach der Evakuierung, zu vermeiden, können zumindest an einigen Einschnürungen, die das Paneel dort aufweist, wo vier der Zellen aneinanderstoßen, Verbindungen zwischen den beiden Platten vorgesehen sein. Diese Verbindungen können z.B. in Form einfacher Stege ausgeführt sein. Es ist möglich, dass die genannten Verbindungen als separate Teile zwischen den beiden Platten eingesetzt sind. Es kann aber auch jeweils eine Hälfte dieser Stege in jede der Platten eingeformt sein, so dass diese Hälften aneinander anstoßen und sich aneinander abstützen können, wenn das Paneel durch durch Aneinanderlegen der Platten zusammengesetzt wird. Zumindest einige dieser Verbindungen können auch hohl, z.B. zylindrisch, ausgeführt sein, so dass diese Verbindungen Durchgangslöcher zum Befestigen des Paneels an einer Wand bilden.

Das Paneel oder die Platten können z.B. aus Kunststoff gebildet sein, was eine besonders preiswerte Herstellung erlaubt. Sie können beispielsweise spritzgegossen, tiefgezogen oder blasgeformt sein. Entsprechendes gilt für mögliche weitere Bestandteile des Paneels, z.B. für Bindeglieder oder Abschlussprofile. Nicht ausgeschlossen ist auch einstückige Herstellung des Paneels. Die Platten müssen also nicht notwendigerweise getrennt hergestellt und dann zusammengesetzt werden, auch wenn das typischerweise der Fall sein wird.

Es kann vorgesehen sein, dass jede der die Außenflächen bildenden Platten mindestens zwei aneinandergesetzte Teilflächen umfasst, die jeweils an einem Rand, an dem die Teilflächen aneinanderstoßen, mit einer Reihe unvollständiger - typischerweise halber - Strukturelemente abschließen, so dass sich jeweils zwei aneinander anstoßende unvollständige Strukturelemente der aneinander anstoßenden Teilflächen zu einem der gleichartigen Strukturelemente ergänzen, wobei auf jeder der Platten ein die Teilflächen verbindender Streifen vorgesehen ist, der die aneinanderstoßenden Ränder abdeckt und so geformt ist, dass er eine aus den unvollständigen Strukturelementen der Teilflächen zusammengesetzte Reihe der Strukturelementen zumindest teilweise bedeckt und dort vollflächig an diesen Strukturelementen anliegt. Die Streifen können dazu z.B. auf die Platten aufgeklebt oder aufgeschweißt sein. Damit ergibt sich ein besonders einfacher Weg, das Paneel an eine gegebene Geometrie und Größe einer zu dämmenden Wand anzupassen oder größere Flächen zu isolieren. Dabei können die einzelnen Teilflächen in weiten Grenzen beliebig zurechtgeschnitten werden, bevor sie in beschriebener Weise durch die Streifen verbunden werden.

Erfindungsgemäß ist der Rand des Paneels zumindest in einem seiner Abschnitte durch eine Reihe von alternierend konvex oder konkav gekrümmten Seitenflächen gebildet, die jeweils eine der genannten Zellen zum Rand hin abschließen, wobei die konkaven Seitenflächen komplementär zu den konvexen Seitenflächen geformt sind. Das ermöglicht in besonders einfacher Weise ein Aneinandersetzen mehrerer Paneele, wobei sich eine der Stabilität dienliche Verzahnung der Paletten an ihren Rändern ergibt. So ergibt sich ein sehr zweckmäßiges modulares System zur flexiblen Gestaltung von Dämmsystemen.

Es kann vorgesehen sein, dass das Paneel mindestens ein längliches Abschlussprofil aufweist, welches das Paneel in dem mindestens einen Abschnitt des Randes seitlich abschließt, wobei die Platten in diesem Abschnitt jeweils mit einer Reihe unvollständiger-typischerweise halber-Strukturelemente abschließen und wobei das Abschlussprofil so geformt ist, dass es an einer den Platten zugewandten Seite innerhalb von zwischen diesen Reihen unvollständiger Strukturelemente der beiden Platten gebildeten unvollständigen Zellen des Paneels zu liegen kommt und dort flächig an den unvollständigen Strukturelementen anliegt, während es diese unvollständigen Zellen zu den von den Seitenflächen zum Rand hin abgeschlossenen Zellen ergänzen. Auch dadurch ergibt sich in einfacher Weise die Möglichkeit, das Paneel auf ein gewünschtes Format zu bringen, beispielsweise durch Schneiden, weil das Abschlussprofil an einer in weiten Grenzen beliebig geführten Schnittlinie oder Randlinie eingesetzt werden kann. Dabei kann das Abschlussprofil z.B. in die unvollständigen Zellen eingeklebt oder dort angeschweißt werden.

Aus alledem ergibt sich, dass man durch Zusammensetzen von zwei oder mehr Paneelen beschriebener Art ein besonders vorteilhaftes Dämmsystem erhält. Dabei kann es vorteilhaft sein, wenn die Hohlräume der aneinandergesetzten Paneele dort, wo die Paneele aneinanderstoßen, miteinander verbunden sind. Unabhängig davon, ob die Paneele durch Entlüften evakuiert werden oder mit einem bestimmten Gas gefüllt werden sollen, vereinfacht das die Evakuierung oder das Füllen der Paneele.

Bei einem Dämmsystem dieser Art können die Ränder der Paneele oder zumindest zweier der Paneele dort aneinanderstoßen, wo die Ränder durch die Reihen von alternierend konvex oder konkav gekrümmten Seitenflächen gebildet sind, wobei die konkaven Seitenflächen eines ersten der aneinanderstoßenden Paneele dort jeweils an einer der konvexen Seitenflächen des anderen Paneels anliegen, während die konvexen Seitenflächen des ersten Paneels dort jeweils an einer der konkaven Seitenflächen des anderen Paneels anliegen. Die Paneele können dabei mit den einander berührenden Seitenflächen aneinandergeklebt oder aneinandergeschweißt sein. Durch die Gestaltung der Seitenflächen sind die Paneele in der beschriebenen Anordnung miteinander verzahnt und daher auch mechanisch stabil verbunden, wobei die Isolierwirkung längs des Randes nur minimal beeinträchtigt wird.

Es ist auch möglich, dass die Paneele oder zumindest zwei der Paneele eines derartigen Dämmsystems in einem nicht verschwindenden Winkel-typischerweise in einem rechten Winkel-zueinander orientiert sind und dass die Ränder dieser Paneele durch ein längliches Bindeglied miteinander verbunden sind. In diesem Fall umfasst das Bindeglied eine Reihe von vorzugsweise miteinander verbundener blasenförmigen Zellen, die an zwei Längsseiten jeweils durch eine Reihe von alternierend konvex oder konkav gekrümmten Seitenflächen des Bindeglieds abgeschlossen werden, wobei diese Seitenflächen komplementär zu den Seitenflächen der durch das Bindeglied miteinander verbundenen Paneele geformt sind und wobei die konkaven Seitenflächen dieser Paneele dort, wo die Paneele mit dem Bindeglied verbunden sind, jeweils an einer der konvexen Seitenflächen des Bindeglieds anliegen, während die konvexen Seitenflächen dieser Paneele dort jeweils an einer der konkaven Seitenflächen des Bindeglieds anliegen. Die Paneele können in diesem Fall im Bereich der genannten Seitenflächen jeweils an das Bindeglied angeklebt oder angeschweißt sein. Durch die Gestaltung der Seitenflächen sind die Paneele in dieser Anordnung jeweils mit dem Bindeglied verzahnt, was ähnlich vorteilhaft ist wie die Verzahnung unmittelbar aneinanderstoßender Paneele.

Es kann vorteilhaft sein, wenn in zumindest einigen der aneinander anliegenden Seitenflächen Öffnungen vorgesehen sind, die so miteinander fluchten oder einander so überschneiden, dass sie mindestens eine Verbindungsöffnung zwischen den Hohlräumen der Paneele bilden. Dadurch ergibt sich eine Verbindung der Hohlräume, die aus den oben genannten Gründen günstig sein kann. Dabei können Ränder der Öffnungen in den Seitenflächen durch einen in die Verbindungsöffnung eingesetzten Dichtungsring abgedichtet sein.

Typische Ausgestaltungen solcher Dämmsysteme sehen vor, dass der Hohlraum mindestens eines der Paneele mit einer Pumpe zum Entlüften oder Belüften der Hohlräume verbunden ist. Vorzugsweise lassen sich dadurch die typischerweise miteinander verbundenen Hohlräume aller Paneele des Dämmsystems evakuieren oder mit einem gewünschten Gas niedriger Wärmeleitfähigkeit füllen. Auch kann ein Dämmsystem dieser Art zum Kühlen eines Gebäudes verwendet werden, indem man ein in diesem Fall zum Abtransport von Wärme dienendes und vorzugsweise kühl zugeführtes Gas durch die Hohlräume der Paneele zirkulieren lässt. Auch das kann mit Hilfe der erwähnten Pumpe geschehen. Umgekehrt könnte man eine Gebäudewand auch Heizen, indem man wärmeres Gas durch die Hohlräume strömen lässt.

Es kann vorgesehen sein, dass an der Pumpe oder innerhalb einer die Pumpe mit dem Paneel verbindenden Leitung oder an einer mit dieser Leitung verbundenen Anschlussöffnung des Paneels ein Ventil angeordnet ist, das absperrbar ausgeführt sein kann, um ein Einströmen oder Entweichen von Gas zu verhindern. Schließlich ist es auch möglich, dass mehrere Dämmsysteme der beschriebenen Art über eine zumindest abschnittsweise gemeinsame Leitung mit einer zentralen Pumpe zum Entlüften oder Belüften verbunden sind.

So kann man mit vergleichsweise niedrigem Aufwand ein Bauwerk realisieren, das dadurch gut isoliert ist, dass es mit einem Dämmsystem hier beschriebener Art ausgestattet ist. Dabei kann es im Hinblick auf eine besonders gute Dämmung günstig sein, wenn mindestens eine der Platten zumindest eines der Paneele an einer Konstruktionsschicht des Bauwerks anliegt, so dass zwischen dieser Platte und der Konstruktionsschicht ein mit Luft gefüllter Hohlraum verbleibt.

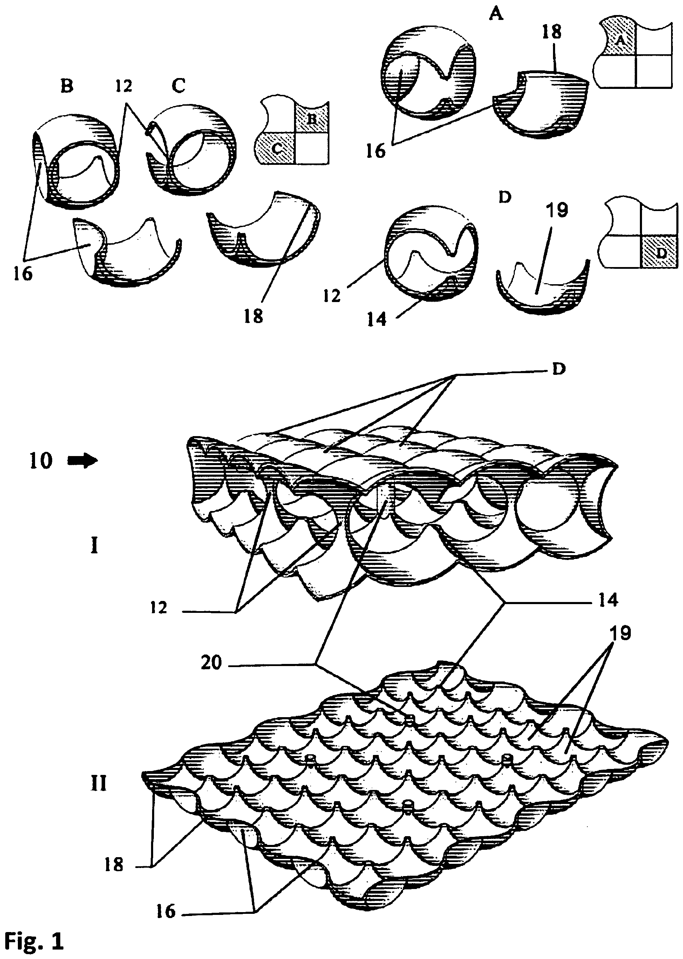

Ausführungsbeispiele der Erfindung werden nach folgend anhand der Figuren 1 bis 6 beschriebe. Es zeigt
- Fig. 1: einzelne blasenförmige Zellen, von denen mehrere zusammen einen Hohlraum eines evakuierbaren Paneels bilden, eine vertikal geschnittene Ansicht eines solchen Paneels und eine untere Hälfte des horizontal geschnittenen Paneels,

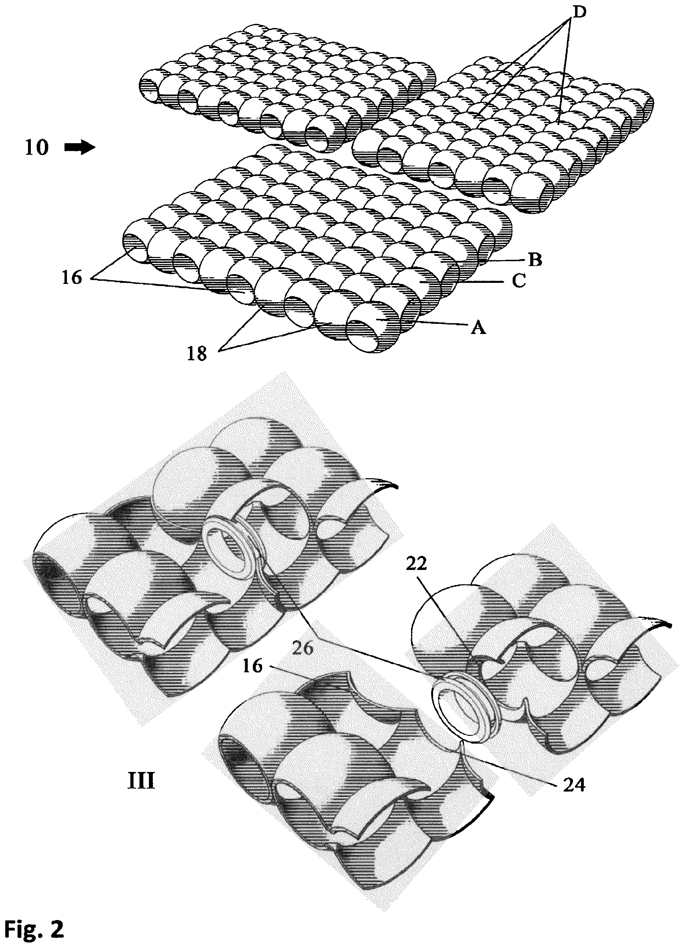

- Fig. 2: eine perspektivische Darstellung einer Zusammensetzung von drei Paneelen dieser Art zur Bildung eines Dämmsystems sowie zwei perspektivische Schnittzeichnungen einer Verbindungsstelle zwischen zwei dieser Paneele,

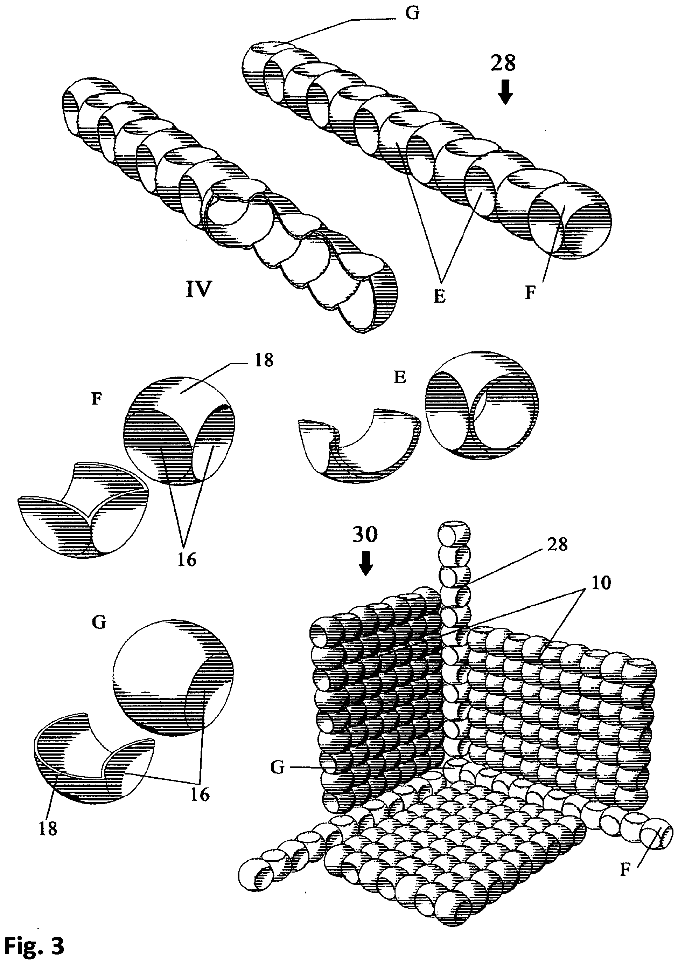

- Fig. 3: eine perspektivische Darstellung einer Zusammensetzung von drei Paneelen dieser Art zur Bildung eines ähnlichen Dämmsystems anderer Geometrie sowie eine vollständige und eine geschnittene Darstellung eines dazu verwendeten länglichen Bindeglieds sowie einzelne Zellen, aus denen ein Hohlraum dieses Bindeglieds gebildet ist,

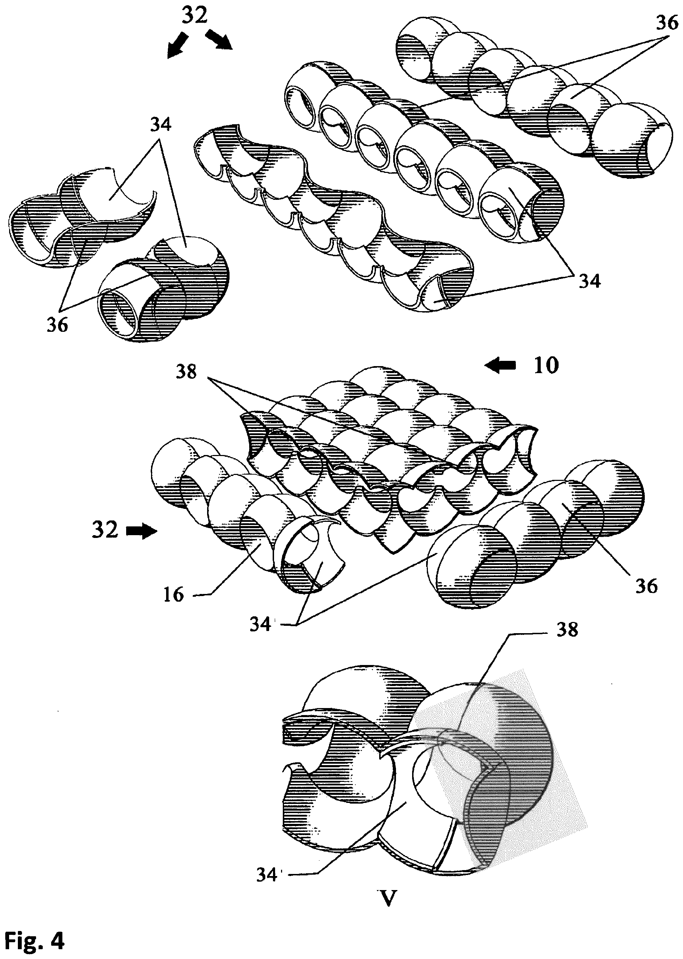

- Fig. 4: in perspektivischer Darstellung die Bildung eines nur teilweise wiedergegebenen ähnlichen Paneels durch Abschließen eines Randes des Paneels mit zwei Abschlussprofils sowie zwei Ansichten eines vollständigen Abschlussprofils dieser Art, eine geschnittene Darstellung einer unteren Hälfte dieses Abschlussprofils und zwei Schnittzeichnungen, in denen jeweils ein Detail zweier zusammengesetzter Abschlussprofile dieser Art zu sehen ist, sowie einen Schnitt durch einen Rand des so gebildeten Paneels,

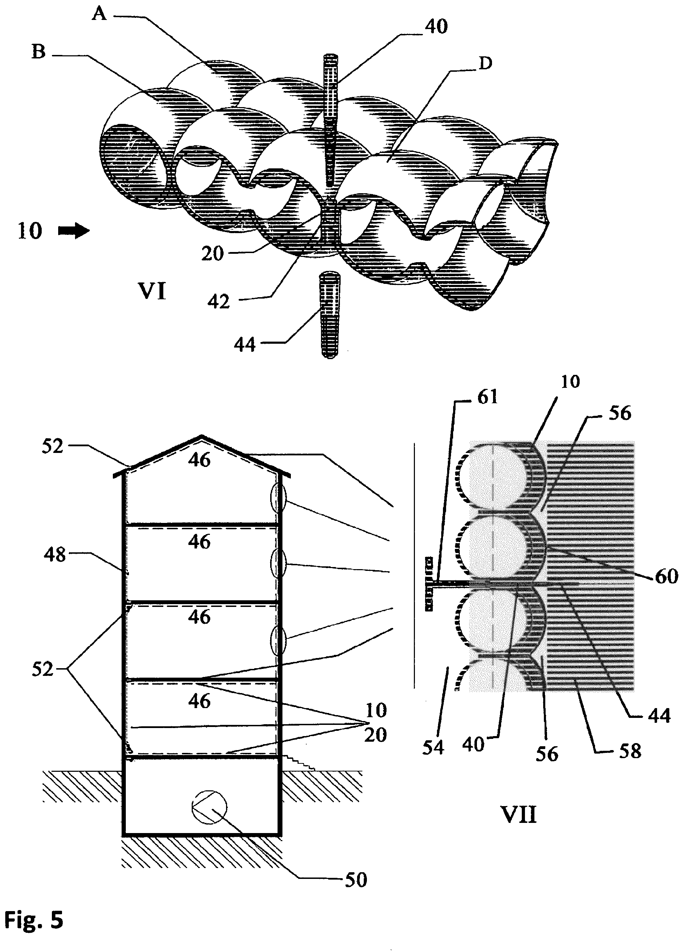

- Fig. 5: eine perspektivische Schnittzeichnung durch ein Paneel beschriebener Art mit Befestigungsmitteln zum Befestigen des Paneels an einer Wand sowie eine schematische Schnittzeichnung durch ein mit einem entsprechenden Dämmsystem isolierten Bauwerks mit einem vergrößert dargestellten Detail betreffend die Befestigung der Paneele an der Wand und

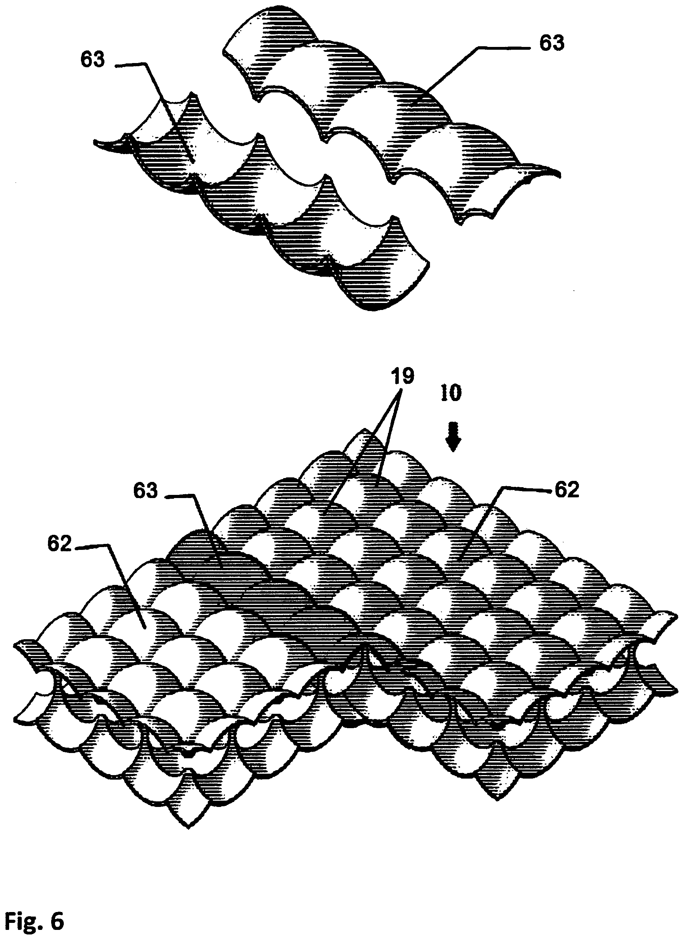

- Fig. 6: eine perspektivische Schnittzeichnung eines Paneels beschriebener Art, bei dem zwei Platten, die zwei Außenflächen des Paneels bilden, aus jeweils mehrere Teilflächen gebildet sind, die mit aufgeklebten oder aufgeschweißten strukturierten Streifen miteinander verbunden sind.

Figur 1 zeigt vier unterschiedlichen Zellenformen von verschiedenen Zellen A bis D, von denen mehrere ein evakuierbares Paneel 10 zum Isolieren eines Gebäudes bilden. Die Aneinandersetzung von mehreren der dargestellten Zellen 10 bildet dabei ein einziges Paneel 10, von dem eine untere Hälfte in Figur 1 unten (Horizontalschnitt II) dargestellt ist. Dabei sind die einzelnen Zellen A bis D in Figur 1 oben als nur gedanklich einzelne Bestandteile des Paneels 10 einzeln dargestellt. Bei der Zelle A handelt es sich um eine Eckzelle des Paneels 10, welche einen Hohlraum ohne Trennwände zu den anschließenden Zellen B und C aufweist. Außenseiten der Zellen B und C unterscheiden sich als hereinragende oder konkave Seitenflächen 16 und herausragende oder konvexe Seitenflächen 18, die in dieser Form zur Verzahnung mit einem anderen Paneel 10 ausgestaltet sind.

Bei den Zellen B und C handelt es sich um die Seitenzellen des Paneels 10, wobei die Zelle B im Gegensatz zur Zelle C über eine hereinragende Seitenfläche 16 anstelle einer konvexen Seitenfläche 18 verfügt. Die Zellen B und C lassen sich in einer Reihenfolge B-C-B zwischen den Eckzellen aneinander anordnen. Sie verfügen über keine Trennwände zwischen einander und bilden somit einen Hohlraum. Auch zu den innen anliegenden Zellen D, bei denen es sich um Mittelzellen des Paneels 10 handelt, erstreckt sich der Hohlraum weiter, da die Seitenzellen über keine Trennwände nach innen verfügen. Die Zellen D sind somit auf allen ihren vier Seitenflächen offen und umfassen an einer Oberseite und an einer Unterseite jeweils eines von vielen gleichartigen Strukturelementen 19. Die Strukturelemente 19 haben hier einen quadratischen Grundriss, wobei zwei entsprechend strukturierte Platten, die zwei einander gegenüberliegende Außenflächen des Paneels 10 bilden, innerhalb der einzelnen Strukturelemente 19 jeweils gleichmäßig nach außen gewölbt sind. Die beiden Platten stützen sich durch nadelförmige Verbindungen 12 aneinander ab, und zwar an einigen Einschnürungspunkten 14, an denen vier der Zellen aneinanderstoßen. Neben den Darstellungen der einzelnen Zellen A, B, C und D in Figur 1 oben sind drei schematische Zeichnungen ergänzt, die jeweils einen horizontalen Schnitt durch eine Ecke des Paneels 10 zeigen und in denen zu erkennen ist, wie die vier verschiedenen Zelltypen in dem Paneel 10 platziert sind. Dort ist insbesondere zu erkennen, dass die Zellen D, die innerhalb eines durch die Zellen A,B und C gebildeten Randbereichs des Paneels 10 liegen, einen quadratischen Grundriss haben, der dem Grundriss eines der Strukturelemente 19 entspricht, und dass diese Zellen D bzw. die Strukturelemente 19 so orientiert sind, dass Randlinien der Grundrisse der Strukturelemente 19 parallel zu Abschnitten eines Randes des Paneels 10 verlaufen.

Die vier verschiedenen Zellen A, B, C und D des Paneels 10 verfügen aufgrund ihrer unterschiedlichen Platzierung und Funktion jeweils über einen (im Fall der Zelle A), zwei (im Fall der Zellen B und C) oder vier (im Fall der Zelle D) Tiefpunkte oder Einschnürungspunkte 14, an denen sich die nadelförmige Verbindungen 12 befinden können. An ausreichend vielen solcher Einschnürungspunkte 14 befinden sich nadelförmige Verbindungen 12, die den Innenraum des Paneels 10 stabilisieren, damit das Paneel 10 einen Druck aushalten kann, der entsteht, wenn in dem Hohlraum durch Abpumpen von Luft Vakuum erzeugt wird. Je nach Bauart und Materialqualität müssen nicht an allen Einschnürungspunkten 14 Verbindungen 12 vorgesehen sein. Durch Weglassen von einigen nadelförmigen Verbindungen 12 wird die Wärmeleitfähigkeit des gesamten Paneels 10 vermindert.

Figur 1 zeigt ferner Schnittperspektiven I und II des Paneels 10. Die Schnittperspektive I stellt einen vertikalen Schnitt dar, in dem die Tiefpunkte oder Einschnürungspunkte 14 mit nadelförmiger Verbindung 12, ohne nadelförmige Verbindung oder mit einer hohlen, zylinderförmigen Verbindung 20 zu sehen sind. Die Anzahl der zylinderförmigen Verbindungen 20 hängt vom Befestigungsbedarf des Paneelformats ab. Sie sind für die Befestigung des Paneels 10 an einer Wand des Bauwerks gedacht.

Die horizontale Schnittperspektive II eines kompletten Paneels 10 zeigt, wie die Seitenzellen B und C miteinander verbunden sind und mit den Eckzellen A zusammen die Seitenzellenreihen formen. Diese Schnittperspektive zeigt eine der beiden genannten Platten von innen. Diese Platten sind aus Kunststoff gefertigt und können spritzgegossen, tiefgezogen oder blasgeformt sein. Hier sind die Mittelzellen, also Zellen D, sowohl miteinander als auch mit den Seitenzellen, also mit den Zellen B und C, vernetzt zu sehen. Zu bemerken ist, dass sich an vier mittig und symmetrisch liegenden Tiefpunkten oder Einschnürungspunkten zylinderförmige Verbindungen 20 befinden.

Figur 2 zeigt in einer Perspektivansicht die Zusammensetzung mehrerer Paneele 10, die durch die Form ihrer Seitenflächen optimal ineinander verzahnt werden können und die zusammengeschweißt oder zusammengeklebt werden können. Wiederkehrende oder entsprechende Merkmale sind hier und in den übrigen Figuren wieder mit denselben Bezugszeichen versehen.

Bei der Zusammensetzung zweier benachbarter Paneele 10, wie im Schnitt III in Figur 2 unten zu sehen ist, sind ihre beiden Innenräume durch eine nachträglich angefertigte Verbindungsöffnung miteinander verbunden. Diese Verbindungsöffnung ist durch jeweils eine Öffnung 22, 24 in jeweils einer der Seitenflächen 16, 18 der aneinander anliegenden verzahnbaren Seitenzellereihen gebildet. Eine der Öffnungen 22 wird an einer hereinragenden Seitenfläche 16 eines Paneels 10 angefertigt. Die zweite Öffnung 24 befindet sich dann an einer dazu passenden herausragenden Seitenzellenfläche 18 des benachbarten Paneels 10. Die zusammengesetzten Paneele 10 werden an ihren jeweiligen verzahnbaren Seitenflächen festgeklebt oder verschweißt, sodass alle Paneele 10 einen Körper bilden. Die so verbundenen Paneele bilden mit Hilfe der Verbindungsöffnungen einen zusammenhängenden Hohlraum.

Figur 2 zeigt ferner einen Dichtungsring 26, der ein ausgearbeitetes Profil besitzt. Das Profil besteht aus einer Rille, in die die jeweiligen Ränder der Öffnungen 22, 24 eingesetzt werden. Dadurch wird bei der Zusammensetzung der Paneele 10 eine hohe Dichtungsqualität an den Durchzugsöffnungen gewährleistet. Bei der Herstellung des Paneels 10 kann der Dichtungsring 26 bereits Bestandteil der vorgefertigten Öffnungen 22 oder 24 sein.

Figur 3 zeigt in einer Perspektivansicht ein ganzes Bindeglied 28 zur Verbindung zweier Paneele in einem rechten Winkel, wobei dieses Bindeglied 28 aus einer Reihe von blasenförmigen Zellen E und zwei Endzellen F und G besteht. Es weist in seiner Gestaltung zwei verschiedene Arten verzahnbarer Seitenflächen 16 und 18 auf, die entsprechend der konkaven und konvexen Seitenflächen des Paneels 10 geformt sind. Ein teilgeschnittenes Paneel-Bindeglied 28 ist im Schnitt IV dargestellt. Zu sehen ist, dass es einen einzigen Innenraum aufweist, indem die Zellen E, F und G miteinander ohne Trennwände verbunden sind. Zelle E ist blasenförmig, besitzt einen Hohlraum und ist an zwei gegenüberliegenden Seiten offen. Sie hat sowohl eine wherein- 16 und eine herausragende Seitenfläche 18. Endzelle F ist ebenso blasenförmig, besitzt einen Hohlraum, ist aber nur an einer Seite offen. Sie weist darüber hinaus eine hereinragende Seitenfläche 16 auf, die der offenen Seite gegenüberliegt Die Endzelle F verfügt außerdem über eine weitere herein-16 und eine herausragende Seitenfläche 18. In ähnlicher Weise ist die Endzelle G angefertigt. Sie hat aber im Gegenteil zu F eine herausragende Seitenfläche 18 gegenüber der offenen Seite.

Die Figur 3 zeigt ferner eine Installation mehrerer entsprechender Paneele 10 und Bindeglieder 28, die eine kritische Stelle 30 (in Bezug auf drei rechtwinklig zueinander stehenden Ebenen, z.B. eine Raumecke) abdecken. Dies wird durch drei Paneele 10 (dunkel) dargestellt, die durch drei Bindeglieder 28 (hell) miteinander verbunden sind. Dabei verbindet jedes Bindeglied 28 mit Hilfe seiner verzahnbaren Seitenflächen zwei zueinander rechtwinklig stehende Paneele 10, die mit den Seitenflächen 16,18 jeweils flächig an das jeweilige Bindeglied 28 angeklebt oder angeschweißt sind. Jedes Bindeglied 28 wird bei der Installation an einem Paneel mit einer Öffnung 22 oder 24 versehen. Der Innenraum des Bindeglieds 28 und der Paneele 10 bilden einen gemeinsamen Hohlraum, indem zwischen Bindeglied und Paneele je eine Öffnung 22, 24 entsprechend Schnitt III der Figur 2 erstellt wird. Die drei Bindeglieder treffen sich am Schnittpunkt in einer ihrer EndZellen F, G, die als Knotenpunkt zwischen den Bindegliedern fungiert.

Figur 4 zeigt ein Paneel-Abschlussprofil 32 in Vorder- und Rückansicht sowie in horizontaler Schnittperspektive. Es besteht aus einer Reihe von blasenförmigen Zellen und besitzt einen einzigen Innenraum. Die vordere Hälfte des Abschlussprofils (dunkel) 36 entspricht in ihrer Form und ihrem Format einer Seitenzellereihe des Paneels 10. Die andere Hälfte (hell) ist etwas kleiner im Vergleich zu den normalen Zellen. Jede ihrer Zellen besitzt eine offene Seite. Ihre Oberfläche dient als Klebefläche 34. Diese Hälfte (hell) passt genau unter eine halbierte Zellereihe eines geschnittenen Paneels 10. Das Abschlussprofil 32 wird an der Schnittstelle 38 des Paneels 10 installiert. Mit dem Abschlussprofil wird das nach Bedarf geschnittene Paneel optimal verschlossen.

Figur 4 zeigt ferner ein zweiseitig geschnittenes Paneel 10 und zwei dazu passende Abschlussprofile 32. Zu bemerken ist, dass die Teilung des Paneels 10 genau in der Mitte 38 einer Zellereihe von Vorteil ist, damit die .Fläche der geschnittenen Zellereihe des Paneels 10 die gesamte Klebefläche 34 des Abschlussprofils 32 bedeckt.

Figur 4 zeigt im Schnitt V eine detaillierte Schnittperspektive der Zusammensetzung des Paneels 10 und des Abschlussprofils 32. Es wird gezeigt, wie die geschnittene Zellereihe über die Klebefläche 34 des Abschlussprofils geschoben und damit vervollständigt ist.

Figur 5 zeigt aus einer Schnittperspektive VI die mit einer Trennwand in der Mitte 42 versehende zylinderförmige Verbindungen 20 des Paneels 10. Um das Paneel am Bauteil zu montieren, wird z.B. eine Schraube 40 durch die Trennwand 42 der zylinderförmigen Verbindungen 20 gebohrt und mittels eines Dübels 44 am Bauteil befestigt. Der Durchmesser der zylinderförmigen Verbindung 20 ist ausreichend stark, dass eine zur Befestigung geeignete Schraube 40 verwendet werden kann, ohne dass dabei die anliegenden blasenförmigen Zellen D beschädigt werden.

Figur 5 zeigt ferner in einer schematischen Darstellung Dämmsysteme 46 in jeder Etage eines vorgeschlagenen Objektbeispiels. Die Dämmsysteme 46 sind in einem mehrgeschossigen Gebäude dargestellt, wobei die verwendete Paneele 10, 28 oben beschriebener Art im Decken-, Wände- und Bodenbereich jedes Dämmsystems 46 je an eine Verbindungsleitung 48 geschlossen ist. Diese verbindet die Dämmsysteme 46 mit der Belüftungs-/ Entlüftungspumpe 50, von der sie gesteuert werden können. Diese Pumpe 50 hat die Funktion, die Dämmungssysteme 46 zu belüften oder zu entlüften. Dies kann in jeder Etage separat und nach Bedarf (z.B. Jahreszeitenwechsel) reguliert werden. Jedes Etagendämmungssystem verfügt über ein Austrittventil 52, welches die Strömung beim Belüften innerhalb des Systems 46 ermöglicht.

Figur 5 stellt im Schnitt VII eine mögliche Installation der Paneele 10 am Bauteil dar. Es zeigt wie die Rückfläche des Paneels 10 die in Richtung Innenraum weist, mit einer Putzschicht 54 versehen werden kann. Durch die Form ihrer vernetzten blasenförmigen Zellen und den dazwischen entstehenden Vertiefungen verhindert die horizontale Verschiebung der Putzschicht 54. Ferner wird gezeigt, wie die Vorderfläche des Paneels 10 an der Konstruktionsschicht 58 des Bauteils anliegt. Dabei ist zu sehen, wie die Scheitelpunkte 60 der blasenförmigen Zellen die einzigen Kontaktpunkte mit der Konstruktionsschicht bilden. Dadurch bleibt um die Scheitelpunkte 60 herum zwischen Vorderfläche des Paneels 10 und Konstruktionsschicht eine Luftschicht 56. Schließlich zeigt Schnitt VII, sowohl wie das Paneel 10 mittels einer Schraube 40 durch die zylinderförmigen Verbindungen 20 am Objekt befestigt ist, als auch den mit der Schraube 40 verbundenen Tellerdübel 61, der die Putzschicht 54 gegen die horizontale und vertikale Kraft hält.

In Figur 6 ist eine perspektivische Schnittzeichnung eines Paneels 10 beschriebener Art, bei dem die zwei Platten, die die zwei Außenflächen des Paneels 10 bilden, aus jeweils mehrere Teilflächen 62 gebildet sind, die mit aufgeklebten oder aufgeschweißten Streifen 63 miteinander verbunden sind. Dabei sind die Streifen 63 so geformt, dass sie jeweils eine Reihe der Strukturelemente 19 abdecken und dort vollflächig an den Platten anliegen, und zwar genau über Rändern der Teilflächen 62, an denen die Teilflächen 62 aneinanderstoßen und wo die Strukturelemente 19 mittig geschnitten sind. In Figur 6 oben sind Abschnitte der beiden Streifen 63 einzeln dargestellt.

### Bezugszeichenliste

- A-G: Zellen
- 10: Paneel
- 12: nadelförmige Verbindung
- 14: Einschnürungspunkt
- 16: konkave Seitenfläche
- 18: konvexe Seitenfläche
- 19: Strukturelement
- 20: zylinderförmige Verbindung
- 22: Öffnung in der hereinragenden Seitenfläche
- 24: Öffnung in der herausragenden Seitenfläche
- 26: Dichtungsring
- 28: Bindeglied
- 30: kritische Stelle
- 32: Abschlussprofil
- 34: Klebefläche
- 36: vordere Hälfte des Abschlussprofils
- 38: Schnittstelle
- 40: Schraube
- 42: Trennwand der zylinderförmigen Verbindung
- 44: Dübel
- 46: Dämmsystem
- 48: Verbindungsleitung
- 50: Belüftungs-/Entlüftungspumpe
- 52: Austrittsventil
- 54: Putzschicht
- 56: Luftschicht
- 58: Konstruktionsschicht
- 60: Scheitelpunkt der blasenförmigen Kammer
- 61: Tellerdübel
- 62: Teilfläche
- 63: Streifen
- I: Vertikalschnittperspektive eines Teilpaneels
- II: Horizontalschnittperspektive eines vollständigen Paneels
- III: Schnittperspektiven der Montage zweier Paneele
- IV: Schnittperspektive eines teilgeschnittenen Paneel-Bindegliedes
- V: Schnittperspektive der Zusammensetzung von einem Paneel und einem Paneel-Abschlussprofil
- VI: Schnittperspektive der Montierungsverfahren eines Paneels
- VII: Schnitt eines installierten Paneels am Objekt

## Patentansprüche

1. Paneel (10) zum Isolieren eines Bauwerks, umfassend zwei geformte Platten, die einen Hohlraum einschließen, wobei die Platten zumindest innerhalb eines durch einen Rand des Paneels (10) begrenzten Bereichs jeweils eine Form haben, die sich aus aneinander angrenzenden, zu einem fortgesetzten Muster zusammengesetzten gleichartigen Strukturelementen (19) von jeweils rechteckigem Grundriss zusammensetzt, wobei jedes dieser Strukturelemente (19) durch eine Erhebung in einer von der jeweils anderen Platte weg weisenden Richtung gegeben ist und wobei die Strukturelemente (19) der beiden Platten einander so gegenüber liegen, dass der Hohlraum eine Vielzahl von einzelnen Zellen (A-G) umfasst, die jeweils durch jeweils eines der Strukturelemente (19) jeder der beiden Platten begrenzt sind, wobei aneinander angrenzende Zellen (A-G) jeweils durch eine frei bleibende Öffnung miteinander verbunden sind, wobei die Platten innerhalb der einzelnen Strukturelemente (19) gleichmäßig konvex gewölbt sind, so dass die Zellen (A-G) eine blasenförmige Gestalt haben,
-**dadurch gekennzeichnet,**
**dass** das Paneel (10) evakuierbar ist, wobei die Strukturelemente (19) so orientiert sind, dass Randlinien der rechteckigen Grundrisse der Strukturelemente (19) parallel zu Abschnitten des Randes des Paneels (10) verlaufen, wobei der Rand des Paneels zumindest in einem der Abschnitte durch eine Reihe von alternierend konvex oder konkav gekrümmten Seitenflächen (16, 18) gebildet ist, die jeweils eine der Zellen (A-G) zum Rand hin abschließen, wobei die konkaven Seitenflächen (16) komplementär zu den konvexen Seitenflächen (18) geformt sind.

2. Paneel (10) nach Anspruch 1, **dadurch gekennzeichnet dass** die Strukturelemente (19) sphärisch oder einem Ausschnitt einer Ellipsoidoberfläche entsprechend geformt sind und/oder dass die Zellen (A-G) jeweils die Form einer an vier Seiten abgeschnittenen Kugel oder eines an vier Seiten abgeschnittenen Ellipsoids haben und/oder dass der Grundriss der einzelnen Strukturelemente (19) jeweils quadratisch ist.

3. Paneel (10) nach einem der Ansprüche 1 oder 2, **dadurch gekennzeichnet, dass** zumindest an einigen Einschnürungen, die das Paneel dort aufweist, wo vier der Zellen (A-D) aneinanderstoßen, Verbindungen (12, 20) zwischen den beiden Platten vorgesehen sind.

4. Paneel (10) nach Anspruch 3, **dadurch gekennzeichnet, dass** zumindest einige der Verbindungen (12, 20) hohl sind, so dass diese Verbindungen (20) Durchgangslöcher zum Befestigen des Paneels (10) an einer Wand bilden.

5. Paneel (10) nach einem der Ansprüche 1 bis 4, **dadurch gekennzeichnet, dass** das die Platten aus Kunststoff gebildet und/oder spritzgegossen, tiefgezogen oder blasgeformt sind.

6. Paneel (10) nach einem der Ansprüche 1 bis 5, **dadurch gekennzeichnet, dass** jede der Platten mindestens zwei aneinandergesetzte Teilflächen umfasst, die jeweils an einem Rand, an dem die Teilflächen aneinanderstoßen, mit einer Reihe unvollständiger Strukturelemente (19) abschließen, so dass sich jeweils zwei aneinander anstoßende unvollständige Strukturelemente (19) der aneinander anstoßenden Teilflächen zu einem der gleichartigen Strukturelemente (19) ergänzen, wobei auf jeder der Platten ein die Teilflächen verbindender Streifen vorgesehen ist, der die aneinanderstoßenden Ränder abdeckt und so geformt ist, dass er eine aus den unvollständigen Strukturelementen (19) der Teilflächen zusammengesetzte Reihe der Strukturelementen (19) zumindest teilweise bedeckt und dort vollflächig an diesen Strukturelementen (19) anliegt.

7. Paneel (10) nach einem der Ansprüche 1 bis 6, **dadurch gekennzeichnet, dass** es mindestens ein längliches Abschlussprofil (32) umfasst, welches das Paneel (10) in dem mindestens einen Abschnitt des Randes seitlich abschließt, wobei die Platten in diesem Abschnitt jeweils mit einer Reihe unvollständiger Strukturelemente (19) abschließen und wobei das Abschlussprofil (32) so geformt ist, dass es an einer den Platten zugewandten Seite innerhalb von zwischen diesen Reihen unvollständiger Strukturelemente (19) der beiden Platten gebildeten unvollständigen Zellen des Paneels (10) zu liegen kommt und dort flächig an den unvollständigen Strukturelementen (19) anliegt, während es diese unvollständigen Zellen zu den von den Seitenflächen (16, 18) zum Rand hin abgeschlossenen Zellen (A-C) ergänzen.

8. Dämmsystem (46), umfassend mindestens zwei aneinandergesetzte Paneele (10) nach einem der Ansprüche 1 bis 7.

9. Dämmsystem (46) nach Anspruch 8, **dadurch gekennzeichnet, dass** die Hohlräume der aneinandergesetzten Paneele (10) dort, wo die Paneele (10) aneinanderstoßen, miteinander verbunden sind.

10. Dämmsystem (46) nach einem der Ansprüche 8 oder 9, **dadurch gekennzeichnet, dass** die Ränder der Paneele (10) oder zumindest zweier der Paneele (10) dort aneinanderstoßen, wo die Ränder durch die Reihen von alternierend konvex oder konkav gekrümmten Seitenflächen (16, 18) gebildet sind, wobei die konkaven Seitenflächen (16) eines ersten der aneinanderstoßenden Paneele (10) dort jeweils an einer der konvexen Seitenflächen (18) des anderen Paneels (10) anliegen, während die konvexen Seitenflächen (18) des ersten Paneels (10) dort jeweils an einer der konkaven Seitenflächen (16) des anderen Paneels (10) anliegen.

11. Dämmsystem (46) nach einem der Ansprüche 8 bis 10, **dadurch gekennzeichnet, dass** die Paneele (10) oder zumindest zwei der Paneele (10) in einem nicht verschwindenden Winkel zueinander orientiert sind und dass die Ränder dieser Paneele (10) durch ein längliches Bindeglied (28) miteinander verbunden sind, wobei das Bindeglied eine Reihe miteinander verbundener blasenförmiger Zellen (E-G) umfasst, die an zwei Längsseiten jeweils durch eine Reihe von alternierend konvex oder konkav gekrümmten Seitenflächen (16, 18) des Bindeglieds (28) abgeschlossen werden, wobei diese Seitenflächen (16, 18) komplementär zu den Seitenflächen (18, 16) der durch das Bindeglied (28) miteinander verbundenen Paneele (10) geformt sind und wobei die konkaven Seitenflächen (16) dieser Paneele (10) dort, wo die Paneele (10) mit dem Bindeglied verbunden sind, jeweils an einer der konvexen Seitenflächen (18) des Bindeglieds (28) anliegen, während die konvexen Seitenflächen (18) dieser Paneele (10) dort jeweils an einer der konkaven Seitenflächen (16) des Bindeglieds (28) anliegen.

12. Dämmsystem (46) nach einem der Ansprüche 10 oder 11, **dadurch gekennzeichnet, dass** in zumindest einigen der aneinander anliegenden Seitenflächen (16, 18) Öffnungen (22, 24) vorgesehen sind, die so miteinander fluchten oder einander so überschneiden, dass sie mindestens eine Verbindungsöffnung zwischen den Hohlräumen der Paneele (10) bilden.

13. Dämmsystem (46) nach einem der Ansprüche 8 bis 12, **dadurch gekennzeichnet, dass** der Hohlraum mindestens eines der Paneele (10) mit einer Pumpe zum Entlüften oder Belüften der Hohlräume verbunden ist.

14. Bauwerk, umfassend ein Dämmsystem (46) nach einem der Ansprüche 8 bis 13, wobei mindestens eine der Platten zumindest eines der Paneele (10) an einer Konstruktionsschicht des Bauwerks anliegt und wobei zwischen dieser Platte und der Konstruktionsschicht ein mit Luft gefüllter Hohlraum verbleibt.

## Claims

1. A panel (10) for insulating a structure, comprising two shaped plates which enclose a cavity, wherein the plates at least within a region which is delimited by an edge of the panel (10) each have a shape which is composed of structure elements (19) each of a rectangular outline, said structure elements being of the same type, being adjacent to one another and being put together into a continued pattern, wherein each of these structure elements (19) is given by a prominence in a direction pointing away from the respective other plate and wherein the structure elements (19) of the two plates lie opposite one another such that the cavity comprises a multitude of individual cells (A-G) which are each delimited by one of the structure elements (19) of each of the two plates, wherein cells (A-G) which are adjacent to one another are each connected to one another by an opening which remains free, wherein the plates within the individual structure elements (19) are uniformly convexly arched, so that the cells (A-G) have a bubble-like form,
**characterised in that**
the panel (10) is evacuable, wherein the structure elements (19) are orientated such that edge lines of the rectangular outlines of the structure elements (19) run parallel to sections of the edge of the panel (10), wherein the edge of the panel at least in of the sections is formed by a row of side surfaces (16, 18) which are convexly or concavely arched in an alternating manner and which each terminate one of the cells (A-G) to the edge, wherein the concave side surfaces (16) are shaped complementarily to the convex side surfaces (18).

2. A panel (10) according to claim 1, **characterised in that** the structure elements (19) are spherically shaped or shaped in accordance with a segment of an ellipsoid surface and/or that the cells (A-G) each have the shape of a ball which is truncated at four sides or of an ellipsoid which is truncated at four sides and/or that the outline of the individual structure elements (19) is square.

3. A panel (10) according to one of the claims 1 or 2, **characterised in that** connections (12, 20) between the two plates are provided at least at some narrowings which the panel has where four of the cells (A-D) abut one another.

4. A panel (10) according to claim 3, **characterised in that** at least some of the connections (12, 20) are hollow, so that these connections (20) form through-holes for fastening the panel (10) to a wall.

5. A panel (10) according to one of the claims 1 to 4, **characterised in that** the plates are formed from plastic and/or are injection moulded, deepdrawn or blow moulded.

6. A panel (10) according to one of the claims 1 to 5, **characterised in that** each of the plates comprises at least two part-surfaces which are put onto one another and which at an edge, at which the part-surfaces abut one another, terminate with a row of incomplete structure elements (19) so that two incomplete structure elements (19) which abut one another, of the part-surfaces which abut one another, complement one another into one of the structure elements (19) of the same type, wherein a strip which connects the part-surfaces is provided on each of the plates, said strip covering the edges which abut on one another and being shaped such that it at least partly covers a row of structure elements (19) which is composed of the incomplete structure elements (19) of the part-surfaces and there bears on these structure elements (19) over the whole surface.

7. A panel (10) according to one of the claims 1 to 6, **characterised in that** it comprises at least one elongate end-profile (32) which laterally terminates the panel (10) in the at least one section of the edge, wherein the plates in this section each terminate with a row of incomplete structure elements (19) and wherein the end-profile (32) is shaped such that it comes to lie on a side facing the plates, within incomplete cells of the panel (1) which are formed between these rows of incomplete structure elements (19) of the two plates and there in a surfaced manner bears on the incomplete structure elements (19) whilst its complements these incomplete cells into the cells (A-C) which are terminated to the edge by the side surfaces (16, 18).

8. An insulation system (46), comprising at least two panels (10) according to one of the claim 1 to 7, said panels being put onto one another.

9. An insulation system (46) according to claim 8, **characterised in that** the cavities of the panels (10) which are put onto one another are connected to one another where the panels (10) abut one another.

10. An insulation system (46) according to one of the claims 8 or 9, **characterised in that** the edges of the panels (10) or at least two of the panels (10) abut one another where the edges are formed by the rows of side surfaces (16, 18) which are arched convexly or concavely in an alternating manner, wherein there the concave side surfaces (16) of a first of the panels (10) abutting one another each bear on one of the convex side surfaces (18) of the other panel (10), whilst there the convex side surfaces (18) of the first panel (10) each bear on one of the concave side surfaces (16) of the other panel (10).

11. An insulation system (46) according to one of the claims 8 to 10, **characterised in that** the panels (10) or at least two of the panels (10) are orientated to one another at a non-disappearing angle and that the edges of these panels (10) are connected to one another by way of an elongate link (28), wherein the link comprises a row of bubble-like cells (E-G) which are connected to one another and which are each terminated at two longitudinal sides by a row of side surfaces (16, 18) of the link (28) which are arched convexly or concavely in an alternating manner, wherein these side surfaces (16, 18) are shaped complementarily to the side surfaces (18, 16) of the panels (28) connected to one another by the link (28), and wherein the concave side surfaces (16) of these panels, where the panels (10) are connected to the link, each bear on one of the convex side surfaces (18) of the link (28), whilst there the convex side surfaces (18) of these panels bear on one of the concave side surfaces (16) of the link (28).

12. An insulation system (46) according to one of the claims 10 or 11, **characterised in that** openings (22, 24) are provided in at least some of the sides surfaces (16, 18) which are adjacent to one another, said openings being aligned to one another or overlapping one another such that they form at least one connecting opening between the cavities of the panels (10).

13. An insulating system (46) according to one of the claims 8 to 12, **characterised in that** the cavity of at least one of the panels (10) is connected to a pump for ventilating or venting the cavities.

14. A structure, comprising an insulating system (46) according to one of the claims 8 to 13, wherein at least one of the plates of at least one of the panels (10) bears on a construction layer of the structure and wherein a cavity filled with air remains between this plate and the construction layer.

## Revendications

1. Panneau (10) pour isoler une structure, comprenant deux plaques formées qui renferment une cavité, dans lequel les plaques, au moins à l'intérieur d'une région qui est délimitée par un bord/une arête du panneau (10), présentent chacune une forme qui est composée par des éléments de structure (19) dont chacun présente un profil rectangulaire, lesdits éléments de structure étant du même type, étant adjacents les uns aux autres et étant placés ensemble selon un motif continu, dans lequel chacun de ces éléments de structure (19) est constitué par une proéminence dans une direction de pointage en mode éloignement par rapport à l'autre plaque respective et dans lequel les éléments de structure (19) de deux plaques s'étendent en opposition de façon mutuelle de telle sorte que la cavité comprenne une multitude de cellules individuelles (A-G) dont chacune est délimitée par l'un des éléments de structure (19) de chacune des deux plaques, dans lequel des cellules (A-G) qui sont adjacentes les unes aux autres sont chacune connectées aux autres au moyen d'une ouverture qui reste libre, dans lequel les plaques à l'intérieur des éléments de structure individuels (19) sont arquées de manière uniformément convexe, de telle sorte que les cellules (A-G) présentent une forme similaire à une bulle,
**caractérisé en ce que** :
le panneau (10) peut être soumis à un vide, dans lequel les éléments de structure (19) sont orientés de telle sorte que des lignes de bord/d'arête des profils rectangulaires des éléments de structure (19) courent parallèlement à des sections du bord du panneau (10), dans lequel le bord du panneau, au moins dans les sections, est formé par une rangée de surfaces latérales (16, 18) qui sont arquées de manière convexe ou de manière concave d'une façon alternée et dont chacune termine l'une des cellules (A-G) jusqu'au bord, dans lequel les surfaces latérales concaves (16) sont formées de façon complémentaire par rapport aux surfaces latérales convexes (18).

2. Panneau (10) selon la revendication 1, **caractérisé en ce que** les éléments de structure (19) sont formés de manière sphérique ou sont formés conformément à un segment d'une surface ellipsoïdale et/ou **en ce que** les cellules (A-G) présentent chacune la form d'une boule qui est tronquée au niveau de quatre côtés ou d'un ellipsoïde qui est tronqué au niveau de quatre côtés et/ou **en ce que** le profil des éléments de structure individuels (19) est carré.

3. Panneau (10) selon l'une des revendications 1 et 2, **caractérisé en ce que** des connexions (12, 20) entre les deux plaques sont prévues au moins au niveau de certains rétrécissements que le panneau comporte là où quatre des cellules (A-D) sont en butée les unes contre les autres.

4. Panneau (10) selon la revendication 3, **caractérisé en ce qu'**au moins certaines des connexions (12, 20) sont creuses, de telle sorte que ces connexions (20) forment des trous traversants pour fixer le panneau (10) à une paroi/un mur.

5. Panneau (10) selon l'une des revendications 1 à 4, **caractérisé en ce que** les plaques sont formées à partir de matière plastique et/ou sont moulées par injection, embouties ou moulées par soufflage.

6. Panneau (10) selon l'une des revendications 1 à 5, **caractérisé en ce que** chacune des plaques comprend au moins deux surfaces partielles qui sont placées l'une sur l'autre ou les unes sur les autres et qui, au niveau d'un bord/d'une arête au niveau duquel/de laquelle les surfaces partielles viennent en butée l'une contre l'autre ou les unes contre les autres, sont terminées par une rangée d'éléments de structure incomplets (19) de telle sorte que deux éléments de structure incomplets (19), qui viennent en butée l'un contre l'autre, des surfaces partielles qui viennent en butée l'une contre l'autre ou les unes contre les autres, soient complémentaires l'un par rapport à l'autre de manière à constituer l'un des éléments de structure (19) du même type, dans lequel une bande qui connecte les surfaces partielles est prévue sur chacune des plaques, ladite bande recouvrant les bords/arêtes qui viennent en butée l'un(e) contre l'autre ou les un(e)s contre les autres et étant formée de telle sorte qu'elle recouvre au moins partiellement une rangée d'éléments de structure (19) qui est composée des éléments de structure incomplets (19) des surfaces partielles et qu'à ce niveau, elle exerce une pression sur ces élément de structure (19) au-dessus de la surface complète.

7. Panneau (10) selon l'une des revendications 1 à 6, **caractérisé en ce qu'**il comprend au moins un profil d'extrémité allongé (32), lequel termine latéralement le panneau (10) dans l'au moins une section du bord, dans lequel les plaques dans cette section sont chacune terminées par une rangé d'éléments de structure incomplets (19) et dans lequel le profil d'extrémité (32) est formé de telle sorte qu'il vienne s'étendre sur un côté qui fait face aux plaques, à l'intérieur de cellules incomplètes du panneau (1) qui sont formées entre ces rangées d'éléments de structure incomplets (19) des deux plaques et de telle sorte que, à ce niveau, d'une manière en surface, il exerce une pression sur les éléments de structure incomplets (19) tout en complétant ces cellules incomplètes à l'intérieur des cellules (A-C) qui sont terminées sur le bord par les surfaces latérales (16, 18).

8. Système d'isolation (46), comprenant au moins deux panneaux (10) selon l'une des revendications 1 à 7, lesdits panneaux étant placés l'un sur l'autre ou les uns sur les autres.

9. Système d'isolation (46) selon la revendication 8, **caractérisé en ce que** les cavités des panneaux (10) qui sont placés les uns sur les autres sont connectées les unes aux autres là où les panneaux (10) viennent en butée les uns contre les autres.

10. Système d'isolation (46) selon l'une des revendications 8 et 9, **caractérisé en ce que** les bords des panneaux (10) ou au moins deux des panneaux (10) viennent en butée les uns contre les autres ou l'un contre l'autre là où les bords sont formés par les rangées de surfaces latérales (16, 18) qui sont arquées de manière convexe ou concave de façon alternée, dans lequel les surfaces latérales concaves (16) d'un premier des panneaux (10) qui viennent en butée les uns contre les autres exercent chacune une pression sur les surfaces latérales convexes (18) de l'autre panneau (10), tandis qu'à ce niveau, les surfaces latérales convexes (18) du premier panneau (10) exercent chacune une pression sur l'une des surfaces latérales concaves (16) de l'autre panneau (10).

11. Système d'isolation (46) selon l'une des revendications 8 à 10, **caractérisé en ce que** les panneaux (10) ou au moins deux des panneaux (10) sont orientés les uns par rapport aux autres ou l'un par rapport à l'autre selon un angle de non disparition et **en ce que** les bords de ces panneaux (10) sont connectés les uns aux autres ou l'un à l'autre au moyen d'une liaison allongée (28), dans lequel la liaison comprend une rangée de cellules en forme de bulle (E-G) qui sont connectées les unes aux autres et qui sont chacune terminées, au niveau de deux côtés longitudinaux, par une rangée de surfaces latérales (16, 18) de la liaison (28) qui sont arquées de manière convexe ou concave d'une façon alternée, dans lequel ces surfaces latérales (16, 18) sont formées de manière complémentaire par rapport aux surfaces latérales (18, 16) des panneaux (28) qui sont connectés les uns aux autres au moyen de la liaison (28), et dans lequel les surfaces latérales concaves (16) de ces panneaux, là où les panneaux (10) sont connectés à la liaison, exercent chacune une pression sur l'une des surfaces latérales convexes (18) de la liaison (28), tandis qu'à ce niveau, les surfaces latérales convexes (18) de ces panneaux exercent une pression sur l'une des surfaces latérales concaves (16) de la liaison (28).

12. Système d'isolation (46) selon l'une des revendications 10 et 11, **caractérisé en ce que** des ouvertures (22, 24) sont ménagées dans au moins certaines des surfaces latérales (16, 18) qui sont adjacentes les unes aux autres, lesdites ouvertures étant alignées les unes par rapport aux autres ou se chevauchant les unes les autres de telle sorte qu'elles forment au moins une ouverture de connexion entre les cavités des panneaux (10).

13. Système d'isolation (46) selon l'une des revendications 8 à 12, **caractérisé en ce que** la cavité d'au moins l'un des panneaux (10) est connectée à une pompe pour ventiler ou aérer les cavités.

14. Structure, comprenant un système d'insolation (46) selon l'une des revendications 8 à 13, dans laquelle au moins l'une des plaques d'au moins l'un des panneaux (10) exerce une pression sur une couche de construction de la structure et dans laquelle une cavité qui est remplie d'air subsiste entre cette plaque et la couche de construction.
